**Europäisches Patentamt**

**European Patent Office**

(19) **Office européen des brevets**

(11) Numéro de publication : **0 314 541 B1**

(12) **FASCICULE DE BREVET EUROPEEN**

(45) Date de publication du fascicule du brevet :
25.09.91 Bulletin 91/39

(51) Int. Cl.⁵ : **G01L 1/22**

(21) Numéro de dépôt : 88402572.7

(22) Date de dépôt : 11.10.88

(54) Jauges de contrainte à fluage reglable et procédé d'obtention de telles jauges.

(30) Priorité : 15.10.87 FR 8714249

(43) Date de publication de la demande :
03.05.89 Bulletin 89/18

(45) Mention de la délivrance du brevet :
25.09.91 Bulletin 91/39

(84) Etats contractants désignés :
BE DE GB IT NL

(56) Documents cités :
EP-A- 0 087 665
US-A- 4 630 491
TECHNISCHES MESSEN vol.50, no. 12,decembre 1983, pages 455-460,Münich; W.J.ORT:
"Sensoren mit Folien-und Dünnfilm-
Dehnungsmesstreifen"

(73) Titulaire : COMMISSARIAT A L'ENERGIE
ATOMIQUE Etablissement de Caractère
Scientifique Technique et Industriel
31/33, rue de la Fédération
F-75015 Paris (FR)

(72) Inventeur : Destannes, Louis
Chemin de Maupertuis Les Chaberts
F-38560 Jarrie (FR)

(74) Mandataire : Mongrédien, André et al
c/o BREVATOME 25, rue de Ponthieu
F-75008 Paris (FR)

Jouve, 18, rue Saint-Denis, 75001 PARIS

## Description

La présente invention a pour objet un procédé d'obtention de jauges de contrainte permettant de compenser le fluage d'un support sur lequel elles sont destinées à être collées. Elle a également pour objet des jauges obtenues par ce procédé, et plus particulièrement les jauges pour corps d'épreuve métalliques.

L'élasticité des matériaux n'est pas parfaite. En particulier, on constate que l'application d'une contrainte ou d'une charge pendant une longue durée entraîne une augmentation progressive des déformations des corps soumis à ces charges. Ce phénomène est appelé le fluage. Quand des jauges de contrainte sont installées sur ces corps, elles subissent donc un allongement supplémentaire qui se traduit par une évolution de leurs indications.

Pour certaines applications où l'on s'intéresse précisément au fluage, il est évidemment souhaitable de pouvoir relever cette évolution ; par contre, notamment dans le cas où le support soumis au fluage est une partie déformable d'un capteur de force ou de pression, cette évolution est nuisible car les mesures ne peuvent plus être fidèles. Dans le cas de machines de pesage où l'on amène progressivement les objets à peser ensemble, le temps de mesure peut atteindre plusieurs minutes ou même plusieurs dizaines de minutes et les variations des indications du capteur peuvent être de plusieurs pourcents. Un problème analogue se pose pour les capteurs de pression qui surveillent en continu l'évolution de la pression d'un liquide dans une conduite. La jauge selon EP-A-0087665 permet de supprimer l'influence indésirable du fluage du matériau support sur le motif résistif d'une jauge de contrainte par formation d'une couche isolante d'un mélange de résine et de poudre solide sur la surface de la jauge.

L'invention permet de supprimer l'influence indésirable du fluage du matériau support sur le motif piézorésistif d'une jauge de contrainte en interposant entre eux une couche d'un matériau soumis à relaxation.

Plus précisément, l'invention concerne un procédé d'obtention de jauges de contrainte permettant de compenser le fluage d'un support sur lequel elles sont destinées à être collées, les jauges comprenant un motif piézorésistif gravé sur une face d'une pellicule souple, caractérisé en ce qu'il comprend les étapes suivantes :

     — dépôt d'une couche d'un matériau soumis à relaxation sur l'autre face de la pellicule ;

     — collage de la couche à relaxation sur une éprouvette de même matériau que le support ;

     — application d'un effort constant engendrant un fluage sur l'éprouvette ;

     — mesure de l'évolution de la résistance de la jauge en fonction du temps ; et

     — ajustement de l'épaisseur de la couche à relaxation pour annuler l'évolution de la résistance de la jauge.

Deux réalisations particulières mises au point par les inventeurs concernent une jauge de contrainte insensible au fluage d'un support d'acier ou d'aluminium sur lequel elle est destinée à être collée, comprenant un motif piézorésistif gravé sur une face d'une pellicule souple, caractérisée en ce qu'elle comprend une couche de constantan d'épaisseur comprise entre 100 et 200 nanomètres dont une face est à coller sur le support et qui est fixée par son autre face à l'autre face de la pellicule souple ou respectivement une couche d'alliage nickel-chrome en proportions massiques 80% et 20% et entre 80 et 100 nm d'épaisseur. Sous leur forme la plus générale, les jauges selon l'invention comprennent une couche sujette à la relaxation dont une face est collée sur un support soumis au fluage. Le matériau de cette couche est toutefois avantageusement métallique et de préférence identique à celui du motif résistant.

On va maintenant décrire l'invention plus en détail à l'aide des deux figures suivantes annexées à titre illustratif et non limitatif :

     — la figure 1 représente une jauge de contrainte selon l'invention au moment où elle est utilisée ou essayée ; et

     — la figure 2 représente un déroulement d'essai typique avec différentes jauges de contrainte, conformes à l'invention ou non, sur un support soumis au fluage.

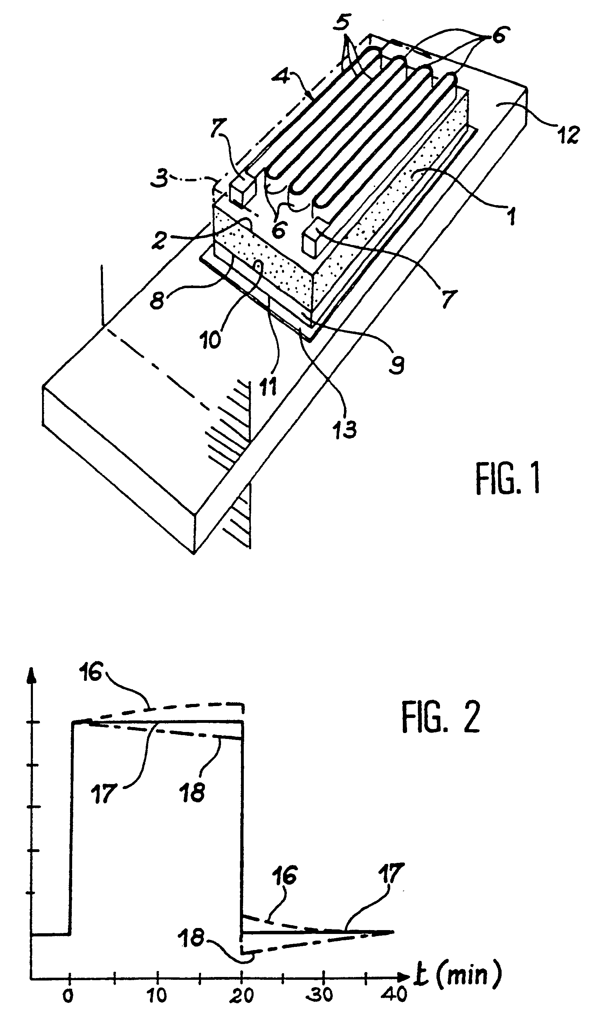

La jauge selon l'invention comporte, comme on le voit sur la figure 1, des parties déjà utilisées selon l'art antérieur : tout d'abord, une pellicule souple 1 qui peut être du polyimide de 25 μm d'épaisseur et sur la face supérieure référencée 2 de laquelle on dépose une fine couche de matériau conducteur 3 de 0,15 μm d'épaisseur environ que l'on grave ensuite de façon à ne laisser subsister qu'un motif piézorésistif 4 comprenant des brins parallèles 5 reliés entre eux par des boucles 6 de façon à former un seul chemin conducteur entre deux bornes 7. Le dépôt de cette mince épaisseur peut être effectué par pulvérisation cathodique ou évaporation par exemple ce qui est rapide, simple, et parfaitement approprié pour des fabrications en grande série. Le motif piézorésistif 4 adhère alors complètement à la pellicule souple 1 dont il suit donc les déformations. L'invention peut toutefois être appliquée également à des motifs piézorésistifs plus épais (5 μm) réalisés après collage de la couche de matériau conducteur sur la pellicule souple. Les valeurs numériques préconisées dans les exemples suivants doivent cependant être ajustées car l'adhérence réalisée par collage n'est pas parfaite et le motif piézorésistif peut lui-même se déformer sous l'effet d'une sollicitation prolongée.

Comme il est connu, l'allongement ou la contraction des brins 5 sont utilisés pour mesurer les déformations du support sur lequel la jauge est collée. Il est évident que sur le dessin les épaisseurs ont été fortement agrandies par souci de clarté.

Selon l'invention, on dépose sur la face inférieure 8 de la pellicule souple 1 une couche 9 sujette à relaxation ; la face supérieure 10 de la couche 9 est soudée à la face inférieure 8 de la pellicule 1, et la face inférieure 11 de la couche 9 est collée à un support 12 soumis au fluage au moyen d'une couche de colle 13.

Quand on soumet le support 12 à une contrainte mécanique d'amplitude constante et de durée assez longue, les indications possibles des jauges sont représentées sur la figure 2. Sur cette représentation graphique, on a porté en abscisses le temps en minutes, et en ordonnées les valeurs relevées par les jauges. Dans cet exemple, la sollicitation mécanique a été appliquée à l'origine des temps et relâchée vingt minutes après. La courbe 16 représente les indications d'une jauge traditionnelle, dépourvue d'une couche 9 sujette à relaxation, et les courbes 17 et 18 représentent les indications de jauges pourvues chacune d'une couche 9 sujette à relaxation, mais d'épaisseurs différentes. On constate que les jauges traditionnelles enregistrent le fluage du support 12 et fournissent des valeurs de plus en plus importantes quand la sollicitation mécanique est prolongée. Cette augmentation est sensiblement linéaire. Quand on relâche le support 12, on constate que la matière ne revient pas immédiatement à son état initial non déformé, car la partie de déformation due au fluage ne se résorbe qu'à une vitesse sensiblement égale à celle du fluage : une déformation résiduelle subsiste pendant encore vingt minutes.

Par conséquent, aussi bien pendant la sollicitation qu'après celle-ci, la mesure de la jauge traditionnelle ne peut être considérée comme fidèle car elle donne des indications différentes avec le temps.

Si la couche 9 sujette à relaxation a une épaisseur relativement importante, on obtient des courbes de réponse du type de la courbe 18 : les indications de la jauge deviennent de moins en moins importantes quand la sollicitation se prolonge, et quand on relâche le support 12, le réajustement à zéro n'est également que progressif et on enregistre pendant ce temps des indications de signe opposé à celles enregistrées pendant la sollicitation. La couche 9 sujette à relaxation se cisaille progressivement, à une vitesse supérieure à la vitesse de fluage, de telle sorte que le motif piézorésistif 4 est soumis à des déformations de plus en plus faibles. Après l'enlèvement de la sollicitation, la relaxation subsiste temporairement et soumet le motif piézorésistif à des déformations de signe opposé qui ne disparaissent qu'après une relaxation inverse de la couche 9. Une jauge selon l'invention a sensiblement la courbe de réponse 17 : les indications que la jauge fournit restent constantes quand la sollicitation se prolonge et reviennent immédiatement à zéro quand le support 12 est relâché. Les indications de cette jauge ne dépendent donc pas du temps.

Cette courbe 17 s'obtient par un choix judicieux de l'épaisseur de la couche 9 sujette à relaxation, une épaisseur trop faible donnant une courbe 16 et une trop élevée donnant une courbe 18. Cette épaisseur peut être déterminée expérimentalement, en fonction des propriétés de fluage du matériau du support 12 et de relaxation du matériau de la couche 9, en choisissant l'épaisseur de la couche 9 que l'on dépose sur la face inférieure 8 de la pellicule souple 1. La jauge est ensuite collée sur un support d'essai de forme et de dimensions quelconques mais de même matériau que le matériau pour lequel la jauge a été prévue, et l'on soumet le support d'essai à une sollicitation constante de durée suffisante. Selon les résultats obtenus, on ajuste l'épaisseur de la couche 9 sujette à relaxation.

Plusieurs expériences ont ainsi été menées. On a découvert que, pour des supports en acier, il était avantageux d'utiliser une couche de constantan d'épaisseur comprise entre 100 et 200 nm, de préférence proche de 160 nm : pour cette dernière valeur, la jauge est totalement insensible au fluage du support 12, et pour les valeurs extrêmes, les variations d'indications dues au fluage ne sont que de 40% des variations que l'on obtiendrait en l'absence de la couche de constantan. Pour des supports d'aluminium, la couche 9 étant cette fois-ci en alliage de nickel-chrome de respectivement 80% et 20% en poids, la fourchette correspondant au même pourcentage de variation des indications est à environ 67 nm et 105 nm. La valeur pour laquelle la jauge est totalement insensible au fluage est d'environ 90 nm.

Bien entendu, l'invention n'est pas limitée à ces exemples précis mais comprend au contraire toutes les jauges obtenues à l'aide du procédé selon l'invention. En particulier, les matériaux du support 12 et de la couche 9 sujette à relaxation peuvent être quelconques et appariés de manière quelconque. Il est simplement avantageux, pour simplifier la fabrication et éventuellement économiser une étape de dépôt en déposant sur les deux faces à la fois, que la couche 9 ait la même composition que le motif piézorésistant 4. Le support 12 peut être gauche, cylindrique par exemple.

On remarquera enfin que la couche 9, quoique souvent conductrice, n'exerce aucune action néfaste sur les mesures électriques par pertes d'impédance car la pellicule souple 1 produit une isolation suffisante.

## Revendications

1. Procédé d'obtention de jauges de contrainte compensant le fluage d'un support (12) sur lequel elles sont destinées à être collées, les jauges comprenant un motif piézorésistif (4) gravé sur une face d'une pellicule (1) souple, caractérisé en ce qu'il comprend les étapes suivantes :

   — dépôt d'une couche (9) d'un matériau soumis à relaxation sur l'autre face (8) de la pellicule (1);

   — collage de la couche (9) à relaxation sur une éprouvette (12) de même matériau que le support (12) ;

   — application d'un effort constant engendrant un fluage sur l'éprouvette (12) ;

   — mesure de l'évolution de la résistance de la jauge en fonction du temps ; et

   — ajustement de l'épaisseur de la couche (9) à relaxation pour annuler l'évolution de la résistance de la jauge.

2. Jauge de contrainte compensant le fluage d'un support (12) sur lequel elle est destinée à être collée, comprenant un motif piézorésistif (4) gravé sur une face (2) d'une pellicule souple (1), caractérisée en ce qu'elle comprend une couche (9) sujette à relaxation dont une face (11) est à coller sur le support (12) et qui est fixée par son autre face (10) à l'autre face (8) de la pellicule souple (1).

3. Jauge de contrainte selon la revendication 2, caractérisée en ce que la couche sujette à relaxation est métallique.

4. Jauge de contrainte selon la revendication 3, pour laquelle le support est en acier, caractérisée en ce que la couche sujette à relaxation est en constantan et d'épaisseur comprise entre 100 et 200 nanomètres.

5. Jauge de contrainte selon la revendication 3, pour laquelle le support est en aluminium, caractérisée en ce que la couche sujette à relaxation est en nickel-chrome en proportions massiques 80% et 20% et d'épaisseur comprise entre 67 et 105 nanomètres.

6. Jauge de contrainte selon la revendication 3, caractérisée en ce que le motif piézorésistif (4) et la couche sujette à relaxation ont même composition.

## Patentansprüche

1. Verfahren zum Herstellen von Dehnungsmeßstreifen, die das Kriechen eines Trägers (12) kompensieren, auf den sie aufgeklebt werden sollen, und die ein piezoresistives Muster (4) aufweisen, das in eine Seite eines weichen Films eingraviert ist, dadurch gekennzeichnet, daß es die folgenden Schritte umfaßt :

   Aufbringen einer Schicht (9) aus einem Material, das einer Relaxation unterworfen wird, auf die andere Seite (8) des Films (1) ;

   Aufkleben der Relaxationsschicht (9) auf einen Probekörper (12) aus dem gleichen Material, wie der Träger (12) ;

   Aufbringen einer konstanten Kraft, die ein Kriechen zur Folge hat, auf den Probekörper ;

Messen der Entwicklung des Widerstandes des Meßstreifens in Abhängigkeit von der Zeit ; und Einstellen der Dicke der Relaxationsschicht (9), um die Entwicklung des Widerstandes des Meßstreifens zu annullieren.

2. Dehnungsmeßstreifen, der das Kriechen eines Trägers (12) kompensiert, auf den er aufgeklebt werden soll, enthaltend ein piezoresistives Muster (4), das in eines Seite (2) eines weichen Films (1) eingraviert ist, dadurch gekennzeichnet, daß sie eine Schicht (9) enthält, die einer Relaxation unterworfen ist, von der eine Seite (11) zum Aufkleben auf den Träger (12) bestimmt ist und die auf ihrer anderen Seite (10) an der anderen Seite (8) des weichen Films (1) befestigt ist.

3. Dehnungsmeßstreifen nach Anspruch 2, dadurch gekennzeichnet, daß die der Relaxation unterworfene Schicht metallisch ist.

4. Dehnungsmeßstreifen nach Anspruch 3, für den der Träger aus Stahl besteht, dadurch gekennzeichnet, daß die der Relaxation unterworfene Schicht aus Konstantan besteht und eine Dicke hat, die zwischen 100 und 200 nm liegt.

5. Dehnungsmeßstreifen nach Anspruch 3, für den der Träger aus Aluminium besteht, dadurch gekennzeichnet, daß die der Relaxation unterworfene Schicht aus Nickel-Chrom in Massenanteilen von 80% und 20% besteht und eine Dicke hat, die zwischen 67 und 105 nm liegt.

6. Dehnungsmeßstreifen nach Anspruch 3, dadurch gekennzeichnet, daß das piezoelektrische Muster (4) und die der Relaxation unterworfene Schicht die gleiche Zusammensetzung haben.

## Claims

1. Process for obtaining strain gauges compensating the creep of a support (12) to which they are to be bonded, the gauges having a piezoresistive pattern (4) etched on one face of a flexible film (1), characterized in that it comprises the following stages :

   deposition of a layer (9) of a material subject to relaxation on the other face (8) of film (1),

   bonding the relaxation layer (9) to a testpiece (12) of the same material as support (12),

   application of a constant force producing a creep on testpiece (12), measurement of the evolution of the resistance of the gauge as a function of time, and

   adjustment of the thickness of relaxation layer (9) to cancel out the evolution of the resistance of the gauge.

2. Strain gauge compensating the creep of a support (12) to which it is to be bonded, comprising a piezoresistive pattern (4) etched on one face (2) of a flexible film (1), characterized in that it comprises a layer (9) subject to relaxation, whereof one face (11) is to be bonded to support (12) and which is fixed by its other face (10) to the other face (8) of the flexible film (1).

3. Strain gauge according to claim 2, characterized in that the layer subject to relaxation is metallic.

4. Strain gauge according to claim 3 for which the support is of steel, characterized in that the layer subject to relaxation is of constantan and has a thickness between 100 and 200 nanometres.

5. Strain gauge according to claim 3 for which the support is of aluminium, characterized in that the layer subject to relaxation is of chrome-nickel alloy in weight proportions of 20 and 80% and thickness between 67 and 105 nanometres.

6. Strain gauge according to claim 3, characterized in that the piezoresistive pattern (4) and the layer subject to relaxation have the same composition.

FIG. 1

FIG. 2